(19) Europäisches Patentamt

European Patent Office

Office européen des brevets

(11) EP 0 524 848 B1

(12) **FASCICULE DE BREVET EUROPEEN**

(45) Date de publication et mention
de la délivrance du brevet:
**13.03.1996 Bulletin 1996/11**

(51) Int. Cl.$^6$: **C01B 21/068**

(21) Numéro de dépôt: **92401856.7**

(22) Date de dépôt: **30.06.1992**

(54) **Procédé de préparation de nitrure de silicium par carbonitruration de silice et nitrure de silicium sous forme de particules exemptes de whiskers**

Verfahren zur Herstellung von Siliziumnitrid durch Karbonitridierung von Siliziumoxid und whiskerfreien Siliziumnitridteilchen

Process for the preparation of silicon nitride by carbonitridation of silica and silicon nitride particles free of whiskers

(84) Etats contractants désignés:
**AT BE CH DE DK ES FR GB GR IT LI LU NL PT SE**

(30) Priorité: **02.07.1991 FR 9108221**

(43) Date de publication de la demande:
**27.01.1993 Bulletin 1993/04**

(73) Titulaire: **ELF ATOCHEM S.A.**
**F-92800 Puteaux (FR)**

(72) Inventeurs:
• **Bachelard, Roland**
**F-69007 Lyon (FR)**
• **Disson, Jean-Pierre**
**F-69008 Lyon (FR)**

(74) Mandataire: **Rochet, Michel et al**
**ELF ATOCHEM S.A.,**
**Département Propriété Industrielle,**
**4-8, Cours Michelet,**
**La Défense 10 - Cedex 42**
**F-92091 Paris-La-Défense (FR)**

(56) Documents cités:
**EP-A- 0 082 343**    **EP-A- 0 131 894**
**EP-A- 0 240 414**    **EP-A- 0 247 907**
**EP-A- 0 272 377**

• **PATENT ABSTRACTS OF JAPAN vol. 15, no. 60 (C-805)13 Février 1991, & JP-A-02 289 407**

Printed by Rank Xerox (UK) Business Services
2.9.12/3.4

## Description

Le nitrure de silicium fait partie de la famille des céramiques dites "techniques". Grâce à un ensemble de propriétés particulières, c'est un candidat sérieux pour la réalisation de matériaux devant conserver leurs propriétés jusqu'à des températures élevées (1000 à 1200°C). Ce produit peut ainsi être utilisé pour la réalisation de patins de culbuteurs, de rotors de turbo-compresseurs, de préchambres de combustion de moteurs diesel dans l'industrie automobile, grâce à une résistance mécanique élevée, même à haute température, à sa résistance aux chocs thermiques et à sa résistance à l'usure. On le retrouve également pour fabriquer des roulements à billes performants grâce à son faible coefficient de frottement et à sa résistance à l'usure ou encore dans la fabrication de buses de pulvérisation, de filières d'extrusion, d'outils de coupe grâce, là encore, à sa dureté élevée et à sa résistance à l'usure.

D'une manière générale, les pièces en nitrure de silicium sont obtenues par frittage à haute température, sous atmosphère d'azote, d'une poudre en nitrure de silicium à laquelle est ajouté un additif favorisant la densification.

A l'heure actuelle, le nitrure de silicium est lui-même préparé, à l'échelle industrielle, selon l'une des deux voies suivantes :

- nitruration directe du silicium :

$$3\ Si + 2\ N_2 \dashrightarrow Si_3N_4$$

réaction très exothermique, difficile à contrôler et qui conduit à des poudres grossières qu'il est donc nécessaire de broyer pour obtenir une poudre fine, laquelle se présente souvent sous forme de grains très anguleux ;
- décomposition d'un polyimide de silicium, par exemple selon les schémas :

$$3\ Si(NH)_2 \dashrightarrow Si_3N_4 + 2NH_3$$

ou

$$3\ Si(NH_2)_4 \dashrightarrow Si_3N_4 + 8NH_3$$

réaction qui conduit à une poudre très fine mais amorphe, qu'il convient ensuite de cristalliser entre 1300 et 1500°C pour obtenir une poudre apte au frittage.

Une autre voie de synthèse de $Si_3N_4$ réside dans la carboréduction ou carbonitruration de silice

$$(3\ SiO_2 + 6C + 2\ N_2 \dashrightarrow Si_3N_4 + 6CO),$$

laquelle présente l'intérêt de partir de produits à faible coût. Elle présente cependant l'inconvénient d'être rarement complète (difficulté d'attaquer les derniers grains de silice). La réaction ne doit pas être conduite à plus de 1500°C environ, au risque de former SiC. Cette réaction passe par un intermédiaire gazeux du silicium, SiO en l'espèce, ce dernier pouvant, par réaction en phase gazeuse

$$(3\ SiO + 3CO + 2\ N_2 \dashrightarrow Si_3N_4 + 3CO_2),$$

conduire à $Si_3N_4$ sous forme non plus sphérique mais de bâtonnets (whiskers). A défaut de réagir de la sorte, SiO peut être transporté par l'azote vers des zones plus froides de l'installation (autour de 1000°C) et se décomposer, provoquant ainsi des encrassements.

Le contrôle de la géométrie des grains, pour éviter entre autres la formation des whiskers, et la mise en forme du mélange réactif ont donné lieu à une abondante littérature, dans laquelle on pourra retenir :

- FR-A-2 388 763 selon lequel on ajoute 5 à 50 % en poids de poudre de $Si_3N_4$ au mélange carbone/silice (amorce de cristallisation, en vue d'obtenir rapidement une poudre fine de $Si_3N_4$) ;
- EP-A-82 343 selon lequel un ajout de moins de 50 % d'amorces $Si_3N_4$ provenant elles-mêmes de carbonitruration est suffisant pour obtenir une poudre fine de géométrie bien contrôlée ;
- JP 61 174 106 selon lequel la poudre fine de $Si_3N_4$ peut être obtenue grâce à des amorces choisies parmi SiC, $Si_3N_4$, AlN, TiN, TiC ;
- JP 63 176301 et JP 63 239 104 selon lesquels l'ajout d'amorces $\beta$ $Si_3N_4$ permet d'obtenir une poudre riche en $\beta$ $Si_3N_4$ et pauvre en alpha $Si_3N_4$ ;
- EP-A-131 894 selon lequel l'incorporation au mélange $SiO_2$/C d'amorces de cristallisation (alpha $Si_3N_4$) et d'un additif choisi parmi les composés de Mg, Be, Ca, Sr, Ge, Sn, Ti, Hf, Zr permet d'obtenir des poudres fines riches en alpha $Si_3N_4$ ;
- NL 88 02117 selon lequel la formation de pastilles de densité inférieure à 0,8 g/cm³ permet d'accroître la réactivité ;
- DE 3 612 162 et JP 63 319 204 selon lesquels les matières premières sont granulées et sont fluidisables par l'azote (2° brevet cité).

EP-A-272377 (Vereinigte Aluminium-Werke) décrit un procédé pour la préparation de nitrure de silicium par carbonitruration de silice. On chauffe à haute température (>1700 °C) un mélange de silice et de carbone dans une atmosphère qui contient de l'azote. Le mélange réactif est mis dans un creuset constitué d'un carbone poreux et qui à son tour est entouré d'une substance à base de carbone.

EP-A-247907 (ATOCHEM) décrit la préparation de $Si_3N_4$ par fabrication de granules, avantageusement par broyage et extrusion d'un mélange constitué de silice, de carbone et d'un liant, suivi d'un chauffage dans une atmosphère contenant de l'azote pour réaliser la réduction carbothermique et nitruration du silice.

En fait, s'il ne fait pas de doute que ces diverses techniques ont pu améliorer, ou contrôler qui le départ ou envolement des composés du silicium, qui la taille des grains, il ne semble pas qu'on ait jusqu'à présent pu en même temps limiter ces envolements de composés du silicium et contrôler la taille des grains grâce à une simple mise en forme du mélange réactionnel. L'invention propose précisément cette solution au double problème rappelé ci-avant.

L'invention propose donc un procédé de préparation de $Si_3N_4$ par carbonitruration de silice, ce procédé permettant à la fois de contrôler la taille et la forme des grains de $Si_3N_4$ et d'éviter les envolements de composés de silicium sans pour autant diminuer les vitesses de réaction.

L'invention a également pour objet du nitrure de silicium $Si_3N_4$ sous forme de particules de forme régulière, exemptes de whiskers.

Le procédé conforme à l'invention est caractérisé en ce qu'il consiste à :

1. mettre en forme un mélange réactif primaire à partir de carbone et de silice ;
2. enrober ce mélange réactif primaire mis en forme dans une matrice poreuse à base de carbone ;
3. soumettre le produit obtenu en 2 aux conditions de carbonitruration et recueillir $Si_3N_4$ ;
4. éventuellement éliminer le carbone excédentaire.

La phase 1 du procédé consiste à mettre en forme le mélange réactif primaire.

Le terme silice désigne présentement la silice elle-même $SiO_2$ ou un précurseur de silice, tel qu'un alkoxyde, alkyle ou alkylhalogénure de silicium, un acide fluorosilicique, du quartz. Le carbone peut être mis en oeuvre sous forme de noir de carbone lequel pouvant être choisi parmi les grandes variétés de noirs telles que carbone végétal, noir d'acétylène, noirs thermiques, noirs de fumée, graphite, coke...

Le carbone participant à la réaction peut également provenir d'une substance susceptible de générer du carbone au cours de la réaction. Une telle substance cokéfiable peut notamment consister en un liant thermodurcissable tel qu'une résine phénolique, notamment phénol-formol, une résine époxy, polyimide, polyurée, polycarbonate. On peut évidemment utiliser un mélange noir de carbone/substance cokéfiable.

Dans le mélange réactif primaire, le rapport molaire carbone total (c'est-à-dire noir et/ou substance cokéfiable, exprimée en C) sur silice (C/Si) est en général compris entre 1 et 20, et de préférence entre 1,5 et 8.

Aux constituants essentiels précités, on peut éventuellement ajouter des amorces de cristallisation, telles que, par exemple, une poudre de $Si_3N_4$. D'une manière générale, la quantité pondérale d'additif n'excède pas 40 % (par rapport à la silice).

On peut également ajouter au mélange un additif choisi parmi les composés de Mg, Ca, Fe, Si, Ti, Zr pour favoriser une cristallisation en alpha $Si_3N_4$, accélérer la réaction et piéger SiO, ces additifs pouvant être utilisés à des teneurs pouvant aller de 0,3 à 10 % en poids, par rapport à la silice.

On peut encore, et essentiellement pour en faciliter la mise en forme, ajouter aux ingrédients précédents de l'eau ou un solvant organique.

Ce mélange réactif primaire peut être granulé, extrudé, pastillé et plus généralement peut se présenter sous une forme quelconque. Il peut également, et notamment en fonction des différents produits additifs et diluants/solvants mis en oeuvre, être ou non séché.

La deuxième étape du procédé comprend la reprise du mélange réactif primaire mis en forme en vue de l'enrober dans une matrice poreuse à base de carbone.

Cette matrice poreuse est avantageusement formée à partir d'un mélange secondaire comprenant un ou plusieurs noirs de carbone et/ou une substance cokéfiable ces différents produits pouvant être choisis parmi les produits précités.

Il convient de noter que dans la seconde étape aussi bien que dans la première, le carbone se présente sous forme de poudre de granulométrie (Sédigraph) avantageusement comprise entre 0,5 et 5 μm, dont la taille des grains élémentaires (microscopie électronique en transmission) est inférieure à 50 nm. La granulométrie (Sédigraph) de la silice de la première étape peut être comprise entre 0,2 et 3 μm, et la taille des grains élémentaires (microscopie électronique en transmission) est avantageusement inférieure à 30 nm.

Il va de soi que le mélange destiné à former la matrice poreuse de la deuxième étape peut également contenir des amorces de cristallisation (par exemple un taux de 1 à 30 % en poids par rapport à C total), ou des additifs favorisant la transformation de SiO en $Si_3N_4$ (par exemple un taux de 0,5 à 80 % par rapport à C total), les divers additifs et amorces pouvant être choisis parmi les produits cités dans l'exposé de la 1ère étape.

De la même manière le mélange de cette seconde étape peut contenir de l'eau ou un solvant organique.

L'enrobage dans la matrice poreuse précitée du mélange réactif primaire mis en forme, peut se faire de différentes manières. Ainsi qu'il a été précisé, le mélange primaire peut se présenter sous une forme quelconque, à la suite de broyage, granulation, extrusion, pastillage... On peut ainsi pulvériser le mélange secondaire sur les granulés (terme utilisé à titre de simplification) de mélange primaire. On peut également ajouter le mélange secondaire aux granulés de mélange primaire en rotation sur un plateau granulateur. Il va de soi que tout procédé classique d'enrobage est utilisable ici.

On peut également obtenir un troisième mélange en reprenant le mélange des granulés primaires et du mélange secondaire. Ce mélange secondaire conduit ainsi à un troisième mélange qui peut être soumis tel quel à la réaction de carbonitruration ou être préalablement mis à son tour en forme par exemple et notamment par extrusion, pastillage, moulage...

La troisième étape du procédé consiste à soumettre les produits résultants de la 2ème étape à une réaction de carbonitruration. D'une manière générale, cette réaction est conduite par chauffage du mélange dans un courant gazeux contenant de l'azote (par exemple azote, ou $NH_3$ plus éventuellement des inertes tels que l'argon, He ou encore du CO ou de l'hydrogène) le plus souvent à pression atmosphérique et à une température pouvant aller de 1300 à 1550°C et de préférence de 1400 à 1500°C.

Le procédé ainsi décrit permet d'obtenir $Si_3N_4$ sous forme de particules de taille et de forme contrôlée exemptes de whiskers, le procédé présentant entre autres l'avantage d'éviter les envolements de composés du silicium sans pour autant diminuer les vitesse de réaction.

Selon une technique en soi connue, le carbone excédentaire peut être éliminé par exemple par combustion à l'air à une température supérieure à 500°C.

Les exemples suivants illustrent l'invention.

## Exemple 1

Matières premières :

- Silice de granulométrie moyenne : 1,7 μm (Sédigraph),et de diamètre de grains élémentaires 5 nm.
- Noir d'acétylène de granulométrie moyenne : 4,5μm (Sédigraph), et de diamètre de grains élémentaires 35 nm.
- Résine phénol-formol en solution aqueuse.
        (concentration 60 %)

On malaxe 720 g de Silice, 216 g de noir, 760 g de résine phénol-formol et 550 g d'eau pendant une heure dans un malaxeur à bras en Z de façon à obtenir le mélange primaire.

Ce mélange est extrudé pour obtenir des bâtonnets de 4 mm de diamètre et 3 à 15 mm de longueur.

Les bâtonnets sont placés sur le plateau d'un appareil de granulation tournant à 750 t/mn. Les extrudats se transforment ainsi en billes dont le diamètre va de 2 à 6 mm.

Une partie de la charge est retirée du granulateur et séchée à 150°C (partie A). L'autre partie reste dans le granulateur dont la vitesse de rotation est ramenée à 250 t/mn.

On introduit alors dans le granulateur 130 g de noir d'acétylène, produit qui se dépose sur les billes et les enrobe totalement. Ces billes (partie B) sont retirées du granulateur et séchées à 150°C.

On place 28 g des billes A ou B dans un creuset en graphite et les traite par un courant d'azote au débit de 34 l/h selon de cycle thermique :

- 1 heure à 1250°C
- 2 heures pendant lesquelles la température est élevée progressivement de 1250 à 1450 °C.
- 7 heures à 1450°C.

Le taux de transformation de $SiO_2$ en $Si_3N_4$, déterminé par dosage en chromatographie du CO dégagé et comparaison du volume cumulé recalculé avec le volume théorique est de 93 % pour les billes B et de 91 % pour les billes A.

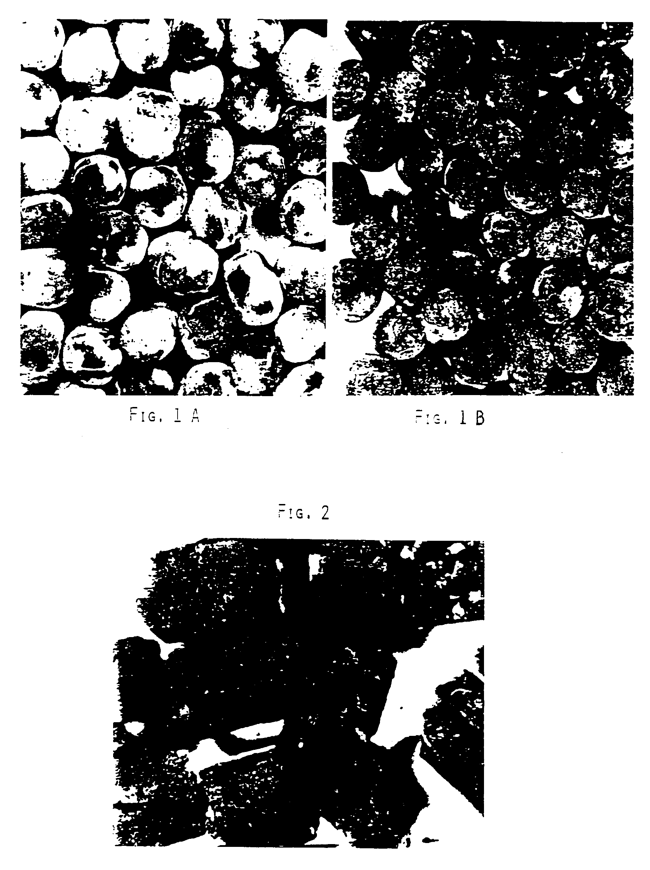

Ainsi qu'il apparaît sur les figures 1A et 1B (X3), les billes B (après enrobage par le carbone) ont une surface quasi exempte de whisker alors que les billes A sont pratiquement recouvertes de whiskers (parties blanches).

## Exemple 2

On mélange 60 g de silice (de l'exemple 1), 6 g de $Si_3N_4$ (particules de granulométrie moyenne : 0, 9 μm granulométrie Sédigraph), 65 g de résine phénol-formol (exemple 1) et 20 g d'eau dans un malaxeur à bras en Z pendant 1 heure. Ce mélange est extrudé au diamètre de 2 mm et séché à 150°C pour obtenir les granulés primaires. Le mélange secondaire est réalisé par malaxage pendant 1 heure de 36 g de noir d'acétylène (ex1), 40 g de résine phénol-formol (ex1) et 70 g d'eau.

On procède à un nouveau mélange de 75 g du mélange secondaire avec 44 g de granulés primaires (1 heure dans un malaxeur en Z) et obtient une incorporation complète des granulés primaires dans le mélange secondaire.

Le mélange final est extrudé sous forme de granulés de 1 cm de diamètre, ces granulés étant séchés à 150°C.

16,2 g de ces granulés sont carbonitrurés dans les conditions suivantes :

- débit de 35 l/h d'azote
- cycle thermique de :

    - 1 heure à 1250°C
    - 2 heures de 1250 °C à 1470°C
    - 3 heures à 1470°C

Le taux de transformation de $SiO_2$ en $Si_3N_4$ (déterminé comme à l'exemple 1) est supérieur à 99 %. Les granulés sont exempts de tous whiskers (fig.2 - X3), et aucun dépôt pouvant provenir d'une décomposition de SiO sur les parties froides du four de carbonitruration n'est observé.

Après traitement à 650°C à l'air pour éliminer le carbone excédentaire, on obtient une poudre fine de nitrure de silicium de surface spécifique (BET) de 25 $m^2$/g.

## Exemple 3

30 g de billes A obtenues comme décrit à l'exemple 1 sont introduites dans un évaporateur rotatif en présence des constituants du mélange secondaire : 50 g de méthanol, 9 g d'eau, 5 g de résine phénol-formol et 15 g de $CaCl_2$. Après évaporation à 150°C, on obtient des billes enrobées par le mélange secondaire.

17 g de ces billes sont traitées dans les conditions de l'exemple 1. Le taux de transformation calculé est de 98 %. Les granulés sont libres de tout whiskers et aucun dépôt de produit pouvant provenir de décomposition du SiO n'est observé.

## Revendications

1. Procédé de préparation de nitrure de silicium par carbonitruration de silice, consistant à :

   1. mettre en forme un mélange réactif primaire à partir de carbone et de silice ;
   2. enrober ce mélange réactif primaire mis en forme dans une matrice poreuse à base de carbone ;
   3. soumettre le produit obtenu en 2 aux conditions de carbonitruration et recueillir $Si_3N_4$ ;
   4. éventuellement éliminer le carbone excédentaire.

2. Procédé selon la revendication 1, caractérisé en ce que le carbone est mis en oeuvre dans la 1ère étape sous forme de noir de carbone et/ou d'une substance capable de générer du carbone au cours de cette réaction.

3. Procédé selon l'une quelconque des revendications 1 ou 2, caractérisé en ce que dans la 1ère étape, le rapport molaire carbone total/silice est compris entre 1 et 20 et de préférence entre 1,5 et 8.

4. Procédé selon l'une quelconque des revendications 1 à 3, caractérisé en ce que le mélange réactif primaire comprend également une amorce de cristallisation et notamment $Si_3N_4$ et/ou un ou plusieurs additifs choisis parmi les composés de Mg, Ca, Fe, Si, Ti, Zr.

5. Procédé selon l'une quelconque des revendications de 1 à 4 caractérisé en ce que le mélange réactif primaire est, avant l'enrobage de la 2° étape, granulé, extrudé, pastillé et, le cas échéant, séché.

6. Procédé selon l'une quelconque des revendications de 1 à 5, caractérisé en ce que la matrice poreuse de la 2° étape est formée à partir d'un mélange secondaire comprenant un ou plusieurs noirs de carbone et/ou une substance cokéfiable.

7. Procédé selon la revendication 6, caractérisé en ce que le mélange secondaire comprend également une amorce de cristallisation et/ou un ou plusieurs des additifs cités dans la revendication 4.

8. Procédé selon l'une quelconque des revendications de 1 à 7, caractérisé en ce que l'enrobage de la 2° étape est réalisé par pulvérisation du mélange secondaire sur le mélange primaire mis en forme ou par addition du mélange secondaire au mélange primaire mis en forme en rotation sur un plateau granulateur.

9. Procédé selon l'une quelconque des revendications 1 à 8, caractérisé en ce qu'il comprend une première extrusion du mélange réactif primaire formé à partir de silice et de carbone et une nouvelle extrusion d'un mélange constitué par les granulés de mélange réactif primaire décrit ci-avant et la matrice poreuse à base de carbone ou ses constituants tels que décrits dans la revendication 6.

10. Procédé selon l'une quelconque des revendications de 1 à 9, caractérisé en ce que les produits résultants de la 2° étape, sont, éventuellement après mise en forme, soumis à une réaction de carbonitruration par chauffage dans un courant gazeux contenant de l'azote à une température comprise entre 1300 et 1550°C.

## Claims

1. Process for the preparation of silicon nitride by carbonitriding silica, consisting in:

   1. shaping a primary reactant mixture from carbon and silica;
   2. coating this shaped primary reactant mixture in a porous matrix based on carbon;
   3. subjecting the product obtained in 2 to the carbonitriding conditions and collecting $Si_3N_4$;
   4. optionally removing the excess carbon.

2. Process according to Claim 1, characterized in that the carbon is used in the 1st stage in the form of carbon black and/or of a substance capable of generating carbon during this reaction.

3. Process according to either of Claims 1 and 2, characterized in that, in the 1st stage, the total carbon/silica molar ratio is between 1 and 20 and preferably between 1.5 and 8.

4. Process according to any one of Claims 1 to 3, characterized in that the primary reactant mixture also includes a crystallization nucleus and especially $Si_3N_4$ and/or one or more additives chosen from the compounds of Mg, Ca, Fe, Si, Ti and Zr.

5. Process according to any one of Claims 1 to 4, characterized in that the primary reactant mixture is granulated, extruded, pelleted and, if appropriate, dried before the coating in the 2nd stage.

6. Process according to any one of Claims 1 to 5, characterized in that the porous matrix of the 2nd stage is made up from a secondary mixture comprising one or more carbon blacks and/or a coking substance.

7. Process according to Claim 6, characterized in that the secondary mixture also includes a crystallization nucleus and/or one or more of the additives mentioned in Claim 4.

**8.** Process according to any one of Claims 1 to 7, characterized in that the coating in the 2nd stage is produced by spraying the secondary mixture on the shaped primary mixture or by addition of the secondary mixture to the shaped primary mixture rotating on a granulator tray.

**9.** Process according to any one of Claims 1 to 8, characterized in that it includes a first extrusion of the primary reactant mixture made up from silica and carbon and a new extrusion of a mixture consisting of the granules of primary reactant mixture described above and the porous matrix based on carbon or its constituents, such as are described in Claim 6.

**10.** Process according to any one of Claims 1 to 9, characterized in that the products resulting from the 2nd stage are, optionally after shaping, subjected to a carbonitriding reaction by heating in a gas stream containing nitrogen at a temperature of between 1300 and 1550°C.

**Patentansprüche**

**1.** Verfahren zur Herstellung von Siliciumnitrid durch Carbonitridierung von Siliciumdioxid, das aus den folgenden Schritten besteht:

1. Eine erste Reaktionsmischung aus Kohlenstoff und Siliciumdioxid wird einer Formgebung unterworfen;

2. diese, einer Formgebung unterworfene erste Reaktionsmischung wird in eine poröse Matrix auf Basis von Kohlenstoff eingebettet;

3. das unter 2 erhaltene Produkt wird den Bedingungen der Carbonitridierung unterworfen, und man erhält $Si_3N_4$;

4. gegebenenfalls wird der überschüssige Kohlenstoff entfernt.

**2.** Verfahren nach Anspruch 1, dadurch gekennzeichnet, daß der Kohlenstoff im ersten Schritt in Form von Ruß und/oder einer Verbindung, die im Laufe dieser Reaktion Kohlenstoff generieren kann, eingesetzt wird.

**3.** Verfahren nach einem der Ansprüche 1 oder 2, dadurch gekennzeichnet, daß im ersten Schritt das Gesamtkohlenstoff/Siliciumdioxid-Molverhältnis zwischen 1 und 20, vorzugsweise zwischen 1,5 und 8, liegt.

**4.** Verfahren nach einem der Ansprüche 1 bis 3, dadurch gekennzeichnet, daß die erste Reaktionsmischung auch einen Kristallisationsstarter, insbesondere $Si_3N_4$ und/oder ein oder mehrere Additive, die aus Verbindungen von Mg, Ca, Fe, Si, Ti und Zr ausgewählt sind, enthält.

**5.** Verfahren nach einem der Ansprüche 1 bis 4, dadurch gekennzeichnet, daß die erste Reaktionsmischung vor der Einbettung in Schritt 2 granuliert, extrudiert, tablettiert und gegebenenfalls getrocknet wird.

**6.** Verfahren nach einem der Ansprüche 1 bis 5, dadurch gekennzeichnet, daß die poröse Matrix aus Schritt 2 ausgehend von einer zweiten Mischung gebildet wird, die ein oder mehrere Ruße und/oder eine verkokbare Substanz enthält.

**7.** Verfahren nach Anspruch 6, dadurch gekennzeichnet, daß die zweite Mischung ebenfalls einen Kristallisationsstarter und/oder ein oder mehrere Additive, wie sie unter Anspruch 4 genannt sind, enthält.

**8.** Verfahren nach einem der Ansprüche 1 bis 7, dadurch gekennzeichnet, daß die Einbettung in Schritt 2 durch Pulverisierung der zweiten Mischung über der einer Formgebung unterworfenen ersten Mischung oder durch Zugabe der zweiten Mischung zu der einer Formgebung unterworfenen ersten Mischung bei Rotation auf einer Granulatorplatte erfolgt.

**9.** Verfahren nach einem der Ansprüche 1 bis 8, dadurch gekennzeichnet, daß es eine erste Extrusion der ausgehend von Siliciumdioxid und Kohlenstoff gebildeten ersten Reaktionsmischung und eine erneute Extrusion einer Mischung umfaßt, die zusammengesetzt ist aus Granulat der oben beschriebenen ersten Reaktionsmischung und der porösen Matrix auf Basis von Kohlenstoff oder ihren Bestandteilen, wie sie in Anspruch 6 beschrieben worden sind.

**10.** Verfahren nach einem der Ansprüche 1 bis 9, dadurch gekennzeichnet, daß die aus Schritt 2 hervorgehenden Produkte, gegebenenfalls nach Formgebung, einer Carbonitridierungsreaktion durch Aufheizen in einem stickstoffhaltigen Gasstrom bei einer Temperatur zwischen 1300 und 1550 °C unterworfen werden.

Fig. 1 A

Fig. 1 B

Fig. 2